# EUROPÄISCHE PATENTANMELDUNG

(11) **EP 4 191 551 A1**
(43) Veröffentlichungstag der Anmeldung: **07.06.2023**
(21) Anmeldenummer: 21211797.2
(22) Anmeldetag: 01.12.2021
(51) Int. Cl.: G08B 13/183, G01V 8/20

(54) **LICHTVORHANG**

(71) Anmelder: Leuze electronic GmbH + Co. KG, 73277 Owen/Teck (DE)
(72) Erfinder: Hörderich, Johann, 82291 Mammendorf (DE)
(74) Vertreter: Ruckh, Rainer Gerhard

(57) **Zusammenfassung**

Die Erfindung betrifft einen Lichtvorhang (1) zur Erfassung von Objekten in einem Überwachungsbereich, mit einer Anordnung von Sender-Empfänger-Paaren. Jedes Sender-Empfänger-Paar weist einen Lichtstrahl (3) emittierenden Sender (4) und einen zugeordneten Empfänger (6) auf, wobei bei freiem Überwachungsbereich die Lichtstrahlen (3) des Senders (4) ungehindert auf den zugeordneten Empfänger (6) treffen, und wobei bei einem Objekteingriff im Überwachungsbereich die Lichtstrahlen (3) wenigstens eines Senders (4) unterbrochen sind. In einer Auswerteeinheit (9), wird in Abhängigkeit von Empfangssignalen der Empfänger (6) ein Objektfeststellungssignal generiert. Die Sender (4) sind einzeln nacheinander jeweils während einer Strahldauer aktiviert und emittieren Lichtstrahlen (3) in Form von Lichtimpulsen. Es sind Sender (4) mit unterschiedlichen Strahldauern vorgesehen, wobei wenigstens ein Sender (4) mit einer gegenüber Strahldauern anderer Sender (4) längeren Strahldauer mittels der Lichtimpulse wenigstens eine Information an den zugeordneten Empfänger (6) überträgt, wodurch ein Informationsstrahl gebildet ist.

## Beschreibung

### Die Erfindung betrifft einen Lichtvorhang.

Derartige Lichtvorhänge dienen zur Erfassung von Objekten in einem Überwachungsbereich. Der Lichtvorhang umfasst typischerweise in einem ersten Gehäuse an einem Rand des Überwachungsbereichs eine Reihenanordnung von Lichtstrahlen emittierenden Sendern und in einem zweiten Gehäuse an dem gegenüberliegenden Rand des Überwachungsbereichs eine Reihenanordnung von Lichtstrahlen empfangenden Empfängern. Weiterhin ist eine Auswerteeinheit vorgesehen, in welcher in Abhängigkeit von Empfangssignalen der Empfänger ein Objektfeststellungssignal generiert. Dieses Objektfeststellungssignal ist vorzugsweise ein binäres Schaltsignal dessen Schaltzustände angeben, ob sich ein Objekt im Überwachungsbereich befindet oder nicht.

Typischerweise emittieren die einzelnen Sender Lichtstrahlen in Form von Lichtimpulsen. Die Lichtimpulse können Kodierungen ausbilden, anhand der die Lichtstrahlen der einzelnen Sender unterscheidbar sind.

Dies kann dazu genutzt werden, dass anhand der Lichtstrahlen eines Senders eine optische Synchronisation des Lichtvorhangs erfolgt, so dass dann Sender-Empfänger-Paare des Lichtvorhangs zyklisch einzeln nacheinander aktiviert werden um die Objekterfassung im Überwachungsbereich durchzuführen.

Der Erfindung liegt die Aufgabe zugrunde einen Lichtvorhang mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Sender-Empfänger-Paaren. Jedes Sender-Empfänger-Paar weist einen Lichtstrahlen emittierenden Sender und einen zugeordneten Empfänger auf, wobei bei freiem Überwachungsbereich die Lichtstrahlen des Senders ungehindert auf den zugeordneten Empfänger treffen. Bei einem Objekteingriff im Überwachungsbereich sind die Lichtstrahlen wenigstens eines Senders unterbrochen. In einer Auswerteeinheit, wird in Abhängigkeit von Empfangssignalen der Empfänger ein Objektfeststellungssignal generiert. Die Sender sind einzeln nacheinander jeweils während einer Strahldauer aktiviert und emittieren Lichtstrahlen in Form von Lichtimpulsen. Es sind Sender mit unterschiedlichen Strahldauern sind vorgesehen, wobei wenigstens ein Sender mit einer gegenüber Strahldauern anderer Sender längeren Strahldauer mittels der Lichtimpulse wenigstens eine Information an den zugeordneten Empfänger überträgt, wodurch ein Informationsstrahl gebildet ist.

Der erfindungsgemäße Lichtvorhang wird in bekannter Weise zur Erfassung von Objekten in einem Überwachungsbereich eingesetzt. Die Sender und Empfänger des Lichtvorhangs bilden dabei zusammenarbeitende Sender-Empfänger-Paare derart, dass bei freiem Überwachungsbereich die Lichtstrahlen des Senders eines Sender-Empfänger-Paars ungehindert auf den Empfänger dieses Sender-Empfänger-Paars treffen. Bei einem Eingriff eines Objektes in dem Überwachungsbereich unterbricht dieses den Strahlengang zumindest einer der Lichtstrahlen wodurch das Objekt erkannt wird. Hierzu wird in der Auswerteeinheit des Lichtvorhangs abhängig von den Empfangssignalen der Empfänger ein Objektfeststellungssignal generiert.

Erfindungsgemäß werden die Lichtstrahlen wenigstens eines der Sender als Informationsstrahlen genutzt, die wenigstens eine Information an den zugeordneten Empfänger übertragen. Durch diese zusätzliche Informationsübertragung ist die Funktionalität des erfindungsgemäßen Lichtvorhangs erheblich erweitert.

Die Sender des Lichtvorhangs sind typischerweise in einer Sendereinheit integriert, während die Empfänger in einer Empfängereinheit integriert sind. Dabei weist die Sendereinheit ein erstes Gehäuse zur Aufnahme der Sender auf. Entsprechend weist die Empfängereinheit ein zweites Gehäuse zur Aufnahme der Empfänger auf. Die Sendereinheit und die Empfängereinheit sind an gegenüberliegenden Seiten des Überwachungsbereichs angeordnet.

Um den Lichtvorhang an die jeweilige Applikation anzupassen, ist es erforderlich dessen Betriebsart einzustellen. Weiterhin ist es erforderlich, den Lichtvorhang zu konfigurieren, beziehungsweise zu parametrieren, in dem bestimmte Parameterwerte für den Lichtvorhang vorgegeben werden. Beispiele für derartige Parameter sind die Auflösung bei der Objekterfassung, Reaktionszeiten zur Generierung des Objektfeststellungssignal und dergleichen.

Beispiele für die Betriebsarten sind Muting- oder Blanking-Funktionen, die insbesondere für Lichtvorhänge in Form von Sicherheitssensoren vorgegeben werden. Derartige Sicherheitssensoren werden im Bereich der Sicherheitstechnik eingesetzt, insbesondere im Bereich des Personenschutzes. Mit dem Lichtvorhang wird dann eine Anlage überwacht, von der Gefahren ausgehen können. In diesem Fall generiert der Lichtvorhang als Objektfeststellungssignal ein binäres Schaltsignal, dessen Schaltzustände angeben, ob sich ein Objekt im Überwachungsbereich befindet oder nicht. Wird mit dem Lichtvorhang ein Objekt im Überwachungsbereich erfasst, wird durch das entsprechende Schaltsignal eine Sicherheitsfunktion ausgelöst, insbesondere die Anlage stillgesetzt.

Bei einem Muting wird der Lichtvorhang zumindest partiell stummgeschaltet (gemutet), so dass ein in dem gemuteten Bereich des Lichtvorhangs befindliches Objekt nicht zur Auslösung der Sicherheitsfunktion führt.

Bei einem Blanking werden bestimmte Strahlachsen, die durch stationäre Gegenstände dauerhaft unterbrochen sind, von der Objekterkennung mit dem Lichtvorhang ausgeblendet. Eine Strahlachse ist dabei von einem Sender-Empfänger-Paar des Lichtvorhangs gebildet.

Bei bekannten Lichtvorhängen müssen Parameterwerte, Betriebsarteneinstellungen und dergleichen sowohl in die Sendereinheit als auch in die Empfängereinheit des Lichtvorhangs eingegeben werden. Dies erfordert nicht nur einen erheblichen Zeitaufwand, sondern typischerweise auch einen zusätzlichen Verkabelungsaufwand, da ein Parametergerät sowohl an die Sendereinheit als auch an die Empfängereinheit angeschlossen werden muss.

Bei dem erfindungsgemäßen Lichtvorhang ist der Aufwand für eine Parametrierung, Betriebsarteneinstellung oder dergleichen erheblich reduziert, da entsprechende Informationen nur noch in die Sendereinheit eingegeben werden müssen. Diese Informationen werden dann selbsttätig über den Informationsstrahl von einem Sender an den zugeordneten Empfänger gesendet und dann in der Empfängereinheit, insbesondere in deren Auswerteeinheit übernommen.

Ein weiterer wesentlicher Vorteil des erfindungsgemäßen Lichtvorhangs besteht in einer zeitoptimierten Informationsübertragung mittels des wenigstens einen Informationsstrahls.

Die einzelnen Sender des Lichtvorhangs werden einzeln zeitlich nacheinander, jeweils während einer Strahldauer aktiviert und emittieren während dieser Lichtimpulse.

Erfindungsgemäß sind die Strahldauern zumindest einiger Sender unterschiedlich. Wenigstens ein Sender ist jeweils für eine längere Strahldauer aktiviert, wobei weitere Sender jeweils für kürzere Strahldauern aktiviert sind. Nur der oder die Sender die für längere Strahldauern aktiviert sind, werden als Informationsstrahlen genutzt. Der Zusatzaufwand für die Informationsübertragung kann in der längeren Strahldauer des jeweiligen Senders leicht integriert werden. Die Sender mit den kürzeren Strahldauern werden dagegen nicht für die Informationsübertragung genutzt.

Da nur ein oder wenige Sender zur Informationsübertragung genutzt werden müssen und nur diese Sender eine längere Strahldauer aufweisen, kann die Zykluszeit des Lichtvorhangs, das heißt die Zeit die für die Aktivierung aller Sender nötig ist, gering gehalten werden, da der Großteil der Sender eine kurze Strahldauer aufweisen kann.

Dementsprechend wird eine kurze Reaktionszeit bei der Generierung des Objektfeststellungssignals erhalten.

Gemäß einer vorteilhaften Ausführungsform emittiert ein Sender mit einer längeren Strahldauer, dessen Lichtstrahlen einen Informationsstrahl bilden, innerhalb einer Strahldauer mehr Lichtimpulse, als ein Sender mit einer kürzeren Strahldauer, mittels dessen keine Information übertragen wird und dessen Lichtstrahlen einen Normalstrahl ausbilden.

Dadurch können für die Normalstrahlen sehr kleine Strahldauern realisiert werden, wodurch die Reaktionszeit des Lichtvorhangs gering gehalten werden kann.

Insbesondere ein Sender, dessen Lichtstrahlen einen Informationsstrahl ausbilden, emittiert pro Strahldauer wenigstens zwei Pulsfolgen mit jeweils wenigstens zwei Lichtimpulsen. Die Pulsfolgen sind durch eine Pulsfolgenpause getrennt, die signifikant größer ist als Pausen zwischen Lichtimpulsen einer Pulsfolge.

Diese Variante ist dann vorteilhaft einsetzbar, wenn parallel zwei Lichtvorhänge eingesetzt werden, die sich gegenseitig beeinflussen können.

Diese Pulsfolgen können besonders gut für eine Informationsübertragung genutzt werden.

Gemäß einer vorteilhaften Ausführungsform wird eine Information mit dem Informationsstrahl dadurch übertragen, dass die Anzahl von Lichtimpulsen und/oder eine Pulsdauer eines Lichtimpulses und/oder eine Pause zwischen Lichtimpulsen variiert wird.

Weiterhin kann eine Information mit dem Informationsstrahl dadurch übertragen werden, dass die Pulsfolgenpause zwischen zwei Pulsfolgen variiert wird.

Die zu übertragende Information kann in einer dieser Kenngrößen kodiert sein. Weiterhin ist es möglich, die zu übertragende Information mittels mehrerer Kenngrößen mehrfach zu kodieren. Dies führt zu einer erhöhten Störfestigkeit bei der Informationsübertragung. Derartige Störungen können insbesondere durch einen zweiten Lichtvorhang verursacht sein, der benachbart zum ersten Lichtvorhang angeordnet ist, so dass Lichtstrahlen des zweiten Lichtvorhangs auf Empfänger des ersten Lichtvorhangs eingestrahlt werden. Dies führt dazu, dass Lichtimpulse des ersten Lichtvorhangs durch Lichtimpulse des zweiten Lichtvorhangs überlagert werden, wodurch zum Beispiel eine der Kenngrößen zur Informationsübertragung gestört werden kann. Da jedoch weitere Kenngrößen durch die Störung nicht beeinflusst sind, kann die Informationsübertragung erfolgreich durchgeführt werden.

Vorteilhaft wird mit dem Informationsstrahl ein Referenz-Lichtimpuls ausgesendet, der bei der Übertragung von Informationen unverändert bleibt.

Auch dadurch wird die Störfestigkeit der Informationsübertragung erhöht.

Zur Erfassung der Pulsdauer eines am Empfänger registrierten Lichtimpulses wird üblicherweise eine Schwellwertbewertung des Empfangssignals durchgeführt. Die Pulsdauer kann damit von der Amplitude des Empfangssignals abhängen. Um dadurch bedingte Verfälschungen der Informationsübertragung zu vermeiden, wird eine zur Informationsübertragung durchgeführte Variation einer Pulsdauer auf den Referenz-Lichtimpuls referenziert.

Im einfachsten Fall wird über nur einen Informationsstrahl nur eine Information übertragen.

Vorteilhaft wird jedoch über den Informationsstrahl mehr als eine Information übertragen.

Dabei ist es möglich, dass in unterschiedlichen Sendezyklen unterschiedliche Informationen über den Informationsstrahl übertragen werden.

### Weiterhin können mehrere Sender jeweils einen Informationsstrahl aussenden.

Dann ist es möglich, dass mittels verschiedener Informationsstrahlen unterschiedliche Informationen übertragen werden.

Zweckmäßig emittiert ein Sender, dessen Lichtstrahlen einen Normalstrahl ausbilden, eine Pulsfolge mit wenigstens drei Lichtimpulsen, die durch identische Pausen getrennt sind.

Weiter zweckmäßig stehen die Pausen von Pulsfolge verschiedener Normalstrahlen in einem vorgegebenen Verhältnis zueinander.

Die so ausgebildeten Kennungen sind deshalb günstig, da es ausreichend ist, einen Teil der jeweiligen Pulsfolgen zu erfassen, um die Gültigkeit der Kodierung des jeweiligen Normalstrahls zu verifizieren.

Gemäß einer zweckmäßigen Auslegung sind wenigstens ein Sender mit einer längeren Strahldauer und weitere Sender mit einer kürzeren Strahldauer vorgesehen. Die längere Strahldauer beträgt ein ganzzahliges Vielfaches der kürzeren Strahldauer.

Dadurch wird für jedes Sender-Empfänger-Paar zuverlässig erkannt, ob an einem Empfänger registrierte Lichtimpulse von zugeordneten Sendern des Sender-Empfänger-Paars stammen.

Generell können alle während einer Strahldauer emittierten Lichtimpulse zur Gültigkeitsprüfung herangezogen werden.

Weiterhin ist auch möglich, dass eine oder mehrere während einer Strahldauer von einem Sender emittierte Pulsfolgen empfangsseitig als gültig klassifiziert werden, wenn wenigstens Teile dieser Pulsfolge als gültig erkannt werden.

Dies stellt eine besonders fehlertolerante Art der Gültigkeitsprüfung dar, da zugelassen wird, dass Teile der Pulsfolge nicht als korrekt erkannt werden müssen.

Die Strahldauer eines Senders kann vom Start der Pulsfolge, die dieser Sender emittiert, bis zum Start der Emission der Pulsfolge des nächsten Senders definiert sein.

Gemäß einer vorteilhaften Ausgestaltung sind dessen Sender und Empfänger jeweils durch eine Schiebekette adressiert.

Jeder Sender ist dann so lange aktiviert, wie er über die Schiebekette aktiviert ist.

In diesem Fall sind durch die Adressierungen der Sender die Strahldauern vorgegeben.

Vorteilhaft werden dabei die Sender-Empfänger-Paare zyklisch einzeln nacheinander aktiviert.

Dementsprechend werden Informationen über Informationsstrahlen zyklisch übertragen.

Gemäß einer vorteilhaften Ausführungsform sind dessen Sender und Empfänger optisch synchronisiert.

Vorteilhaft erfolgt die optische Synchronisation anhand eines Synchronisationsstrahls, wobei der Synchronisationsstrahl von einem Informationsstrahl gebildet ist.

### Der Informationsstrahl erfüllt somit eine Doppelfunktion.

Generell ist es möglich, dass mehrere Synchronisationsstrahlen vorhanden sind. Dann wird wahlweise einer der Synchronisationsstrahlen zur Synchronisation der Sender und Empfänger herangezogen.

Für die Informationsübertragung werden nur wenige Informationsstrahlen, das heißt nur ein kleiner Teil der Sender des Lichtvorhangs genutzt. Dasselbe gilt auch für die Synchronisationsstrahlen. Da somit nur ein kleiner Teil der Sender zur simultanen Ausbildung von Informationsstrahlen und Synchronisationsstrahlen benötigt wird, können die restlichen Sender Normalstrahlen mit kleinen Strahldauern ausbilden, wodurch eine kurze Reaktionszeit des Lichtvorhangs erhalten wird.

Vorteilhaft weisen die Synchronisationsstrahlen unterschiedliche, durch Lichtimpulse vorgegebene Kodierungen auf.

Auch kann zusätzlich eine Synchronisationspause vor der jeweiligen Pulsfolge eines Synchronisationsstrahls vorgesehen sein.

Vorteilhaft ist der oder die Synchronisationsstrahlen durch Erkennen wenigstens eines Teils dessen innerhalb einer Strahldauer emittierten Lichtimpuls eindeutig identifizierbar.

Damit ist eine sichere Synchronisation des Lichtvorhangs gewährleistet.

Die Erfindung wird im Folgenden anhand der Zeichnung erläutert. Es zeigen:
- Figur 1:: Ausführungsbeispiel des erfindungsgemäßen Lichtvorhangs.
- Figur 2:: Schematische Darstellung von Strahlentypen des Lichtvorhangs gemäß Figur 1.
- Figur 3:: Variante von Strahlentypen für den Lichtvorhang gemäß Figur 1.
- Figur 4:: Strahlentyp gemäß Figur 3 bei vorhandener Störeinstrahlung.
- Figur 5:: Anordnung zweier sich gegenseitig beeinflussender Lichtvorhänge.
- Figur 6:: Einzeldarstellung eines Informationsstrahls des Lichtvorhangs gemäß Figur 2.
- Figur 7a-c:: Unterschiedliche Möglichkeiten der Kodierung eines Informationszustands für den Informationsstrahl gemäß Figur 6.
- Figur 8a-c:: Kodierungen unterschiedlicher Informationszustände für den Informationsstrahl gemäß Figur 6.
- Figur 9a,b:: Kodierungen unterschiedlicher Informationszustände durch Variation der Pulsansicht von Lichtimpulsen für den Informationsstrahl gemäß Figur 6.
- Figur 10a,b:: Kodierungen unterschiedlicher Informationszustände durch Variation der Pulsdauern von Lichtimpulsen für den Informationsstrahl gemäß Figur 6.

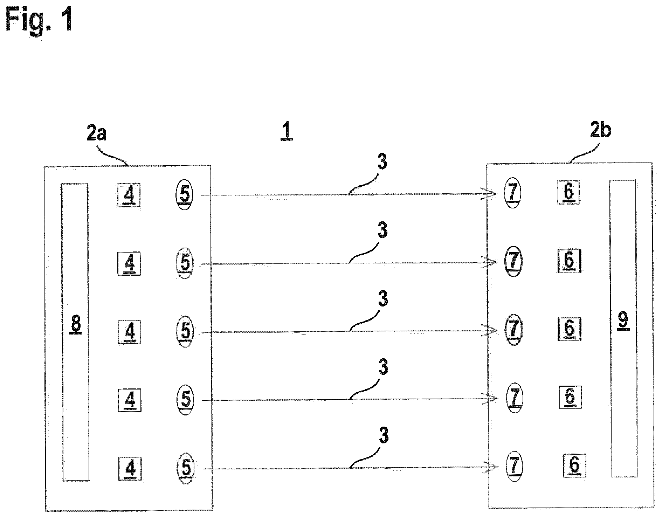

Figur 1 zeigt schematisch den Aufbau eines Ausführungsbeispiels des erfindungsgemäßen Lichtvorhangs 1 zur Erfassung von Objekten innerhalb eines Überwachungsbereichs.

Der Lichtvorhang 1 weist eine Sendereinheit mit einem Gehäuse 2a mit einer Reihenanordnung von Lichtstrahlen 3 emittierenden Sendern 4 und diesen zugeordneten Sendeoptiken 5 auf. Weiterhin weist der Lichtvorhang 1 eine Empfängereinheit mit einem zweiten Gehäuse 2b mit einer Reihenanordnung von Lichtstrahlen 3 empfangenden Empfängern 6 auf, welchen jeweils eine Empfangsoptik 7 vorgeordnet ist.

Die Gehäuse 2a, 2b sind an gegenüberliegenden Rändern des Überwachungsbereichs so angeordnet, dass jeweils ein Empfänger 6 einem Sender 4 gegenüberliegend angeordnet ist und mit diesem ein Sender-Empfänger-Paar bildet, wobei die Lichtstrahlen 3 des Senders 4 eine Strahlachse bilden. Im vorliegenden Fall sind fünf Strahlachsen vorgesehen. Natürlich kann der Lichtvorhang 1 auch eine andere Zahl von Strahlachsen aufweisen.

Die Sender 4 werden von einer Sendersteuerung 8 gesteuert. Den Empfängern 6 ist eine Auswerteeinheit 9 zugeordnet. Dabei werden die Strahlachsen zyklisch einzeln nacheinander aktiviert. Die Auswerteeinheit 9 steuert die Empfänger 6 an und wertet deren Empfangssignale zur Generierung eines Objektfeststellungssignals in Form eines binären Schaltsignals aus, dessen Schaltzustände angeben, ob sich ein Objekt im Überwachungsbereich befindet oder nicht. Bei freiem Überwachungsbereich gelangen die Lichtstrahlen 3 der Strahlachsen ungehindert zum Empfänger 6 der jeweiligen Strahlachse. Bei einem Objekteingriff wird wenigstens eine Strahlachse unterbrochen. Die Auswerteeinheit 9 kann einen mehrkanaligen Aufbau aufweisen, falls der Lichtvorhang 1 einen Sicherheitssensor bildet.

Die Erfassung von Objekten erfolgt in einem Arbeitsbetrieb des Lichtvorhangs 1. Die Sender 4 emittieren dabei Lichtstrahlen 3 in Form von Lichtimpulsen.

Die Sender 4 werden mittels einer in der Sendersteuerung 8 Schiebekette zyklisch einzeln nacheinander aktiviert. Entsprechend werden die Empfänger 6 mittels einer Schiebekette zyklisch einzeln nacheinander aktiviert. Der Lichtvorhang 1 ist auf optischem Weg synchronisiert, so dass dessen Sender-Empfänger-Paar zyklisch einzeln nacheinander aktiviert sind.

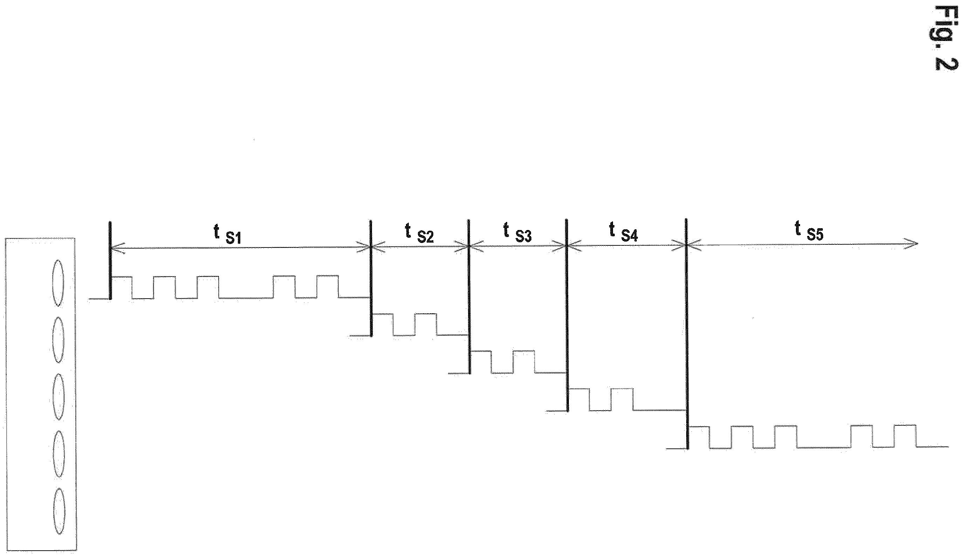

Figur 2 zeigt den zeitlichen Verlauf der Aktivierung der Sender 4 des Lichtvorhangs 1 während eines Zyklus. Durch die Adressierung der Sender 4 mittels der Schiebekette werden diese nacheinander für eine Strahldauer tₛ₁...tₛ₅ aktiviert, wobei der jeweilige Sender 4 während dieser Strahldauer Lichtimpulse emittiert.

Wie Figur 2 zeigt, sind der erste und fünfte Sender 4 für eine längere Strahldauer tₛ₁, tₛ₅ aktiviert, wogegen der zweite, dritte und vierte Sender 4 für kürzere Strahldauern tₛ₂, tₛ₃, tₛ₄ aktiviert sind, die im vorliegenden Fall nicht identisch sind. Generell können die längeren Strahldauern tₛ₁, tₛ₅ einerseits und die kürzeren Strahldauern tₛ₂, tₛ₃, tₛ₄ identisch sein.

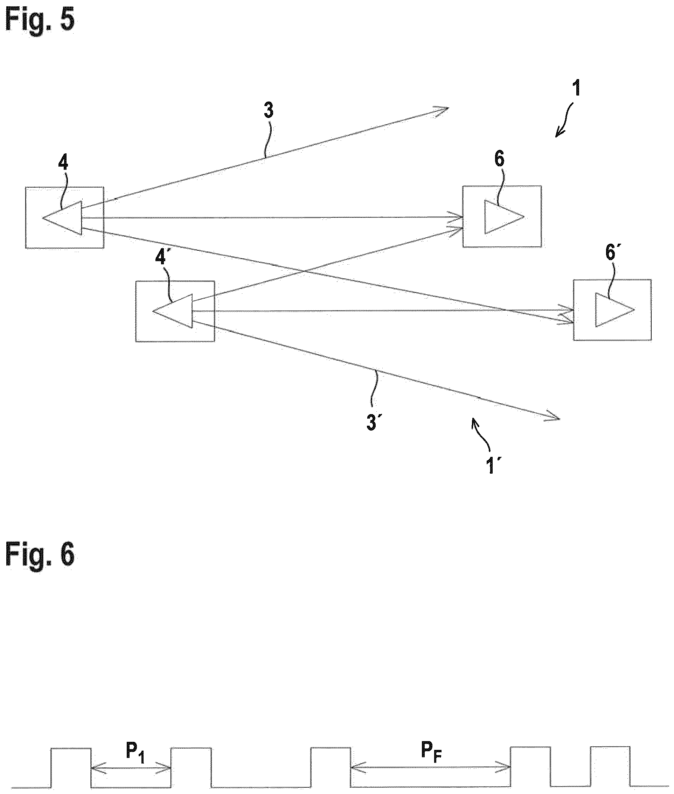

Wie Figur 2 und auch Figur 6 in einer Einzeldarstellung zeigen, emittiert der erste beziehungsweise fünfte Sender 4 während der Strahldauer tₛ₁ beziehungsweise tₛ₅ fünf Lichtimpulse. Dabei bilden erste drei Lichtimpulse, eine erste Pulsfolge, und die beiden letzten Lichtimpulse bilden eine zweite Pulsfolge.

Die Lichtimpulse innerhalb einer Pulsfolge sind jeweils durch eine Pause P₁ getrennt. Die beiden Pulsfolgen sind durch eine Pulsfolgenpause Pulsfolge _{PF} getrennt, die signifikant größer als die Pause P₁ ist.

Die Lichtimpulse der Sender 4, die bei freiem Überwachungsbereich auf die zugeordneten Empfänger 6 gelangen, werden in der Auswerteeinheit 9 erkannt und identifiziert.

Dabei werden in der Auswerteeinheit 9 Gültigkeitsprüfungen von mit den Empfängern 6 registrierten Lichtimpulsen durchgeführt.

Insbesondere werden die Gültigkeitsprüfungen in Form von Sollwertvergleichen durchgeführt.

Die Lichtstrahlen 3 des ersten und fünften Senders 4 bilden Informationsstrahlen, mittels derer Informationen wie zum Beispiel Parameterwerte und dergleichen vom Sender 4 an den zugeordneten Empfänger 6 übertragen werden können. Damit muss nur die Sendereinheit parametriert werden. Die in der Sendereinheit übertragenen Parameter werden über den oder die Informationsstrahlen an die Empfängereinheit übertragen und stehen dann auch dort zur Verfügung.

Die Lichtstrahlen 3 des zweiten, dritten und vierten Senders 4 bilden Normalstrahlen über die keine Informationen übertragen werden. Bei der Ausführungsform gemäß Figur 2 werden für jeden Normalstrahl während einer Strahldauer tₛ₂, tₛ₃, tₛ₄ zwei Lichtimpulse emittiert. Generell emittiert der Sender 4 einen Normalstrahl pro Strahldauer weniger Lichtimpulse als ein Sender 4 eines Informationsstrahls.

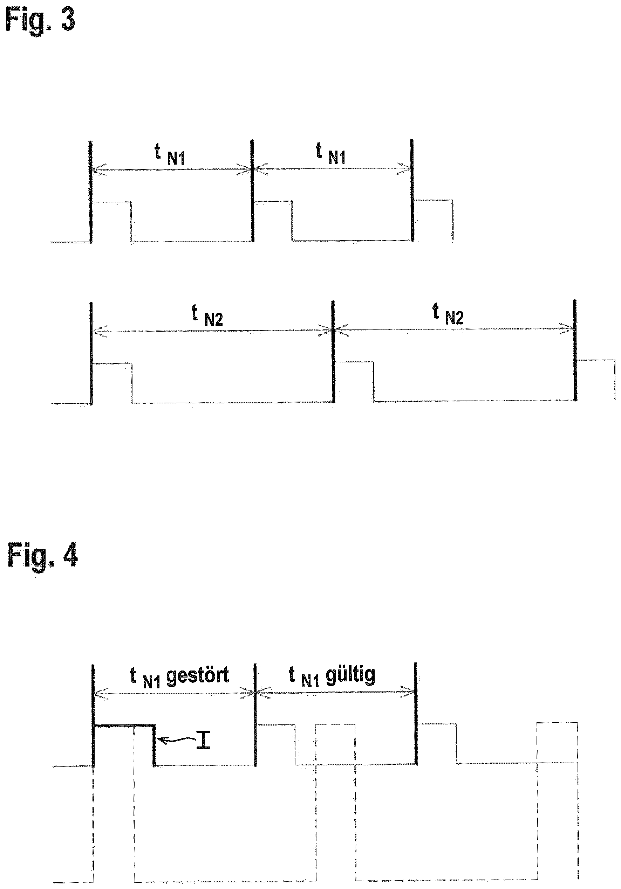

Figur 3 zeigt eine Variante der Ausführungsform hinsichtlich der Emission von Lichtimpulsen für Normalstrahlen.

Dabei ist eine Strahldauer für einen ersten Normalstrahl dargestellt. Dort emittiert der Sender 4 drei Lichtimpulse die durch gleiche Pausen getrennt sind, wodurch zwei Zeitintervalle t_{N1} gebildet werden, die Pulsabständen zweier aufeinander Lichtimpulse entsprechen. Weiterhin ist eine Strahldauer für einen zweiten Normalstrahl dargestellt. Auch dort emittiert ein Sender drei Lichtimpulse, die jedoch jeweils durch eine größere Pause getrennt sind, wodurch zwei Zeitintervalle t_{N2} gebildet werden, die wieder Pulsabständen zweier aufeinander folgender Lichtimpulse entsprechen. Die Zeitintervalle t_{N1}, t_{N2} stehen in einem fest vorgegebenen Zahlenverhältnis.

Die Ausbildung dieser Normalstrahlen ist besonders unempfindlich gegenüber Störeinflüssen, dargestellt in Figur 4. Derartige Störungen können dadurch auftreten, dass neben dem Lichtvorhang 1 ein weiterer Lichtvorhang 1' mit weiteren Sendern 4' und Empfängern 6' angeordnete ist (Figur 5). Lichtstrahlen 3' des Lichtvorhangs 1' strahlen dann in Empfänger 6 des Lichtvorhangs 1 ein und verursachen dort Störsignale.

In Figur 4 sind gestrichelt Lichtimpulse des Lichtvorhangs 1' dargestellt, die in einen Empfänger 6 des Lichtvorhangs 1 einstrahlen, wodurch ein Störsignal in Form einer Pulsüberlagerung (I) generiert wird. Das erste Zeitintervall t_{N1} ist somit gestört, nicht jedoch das zweite Zeitintervall t_{N2}. Dies ungestörte Zeitintervall kann bereits ausreichen, um den Normalstrahl als gültig zu erkennen.

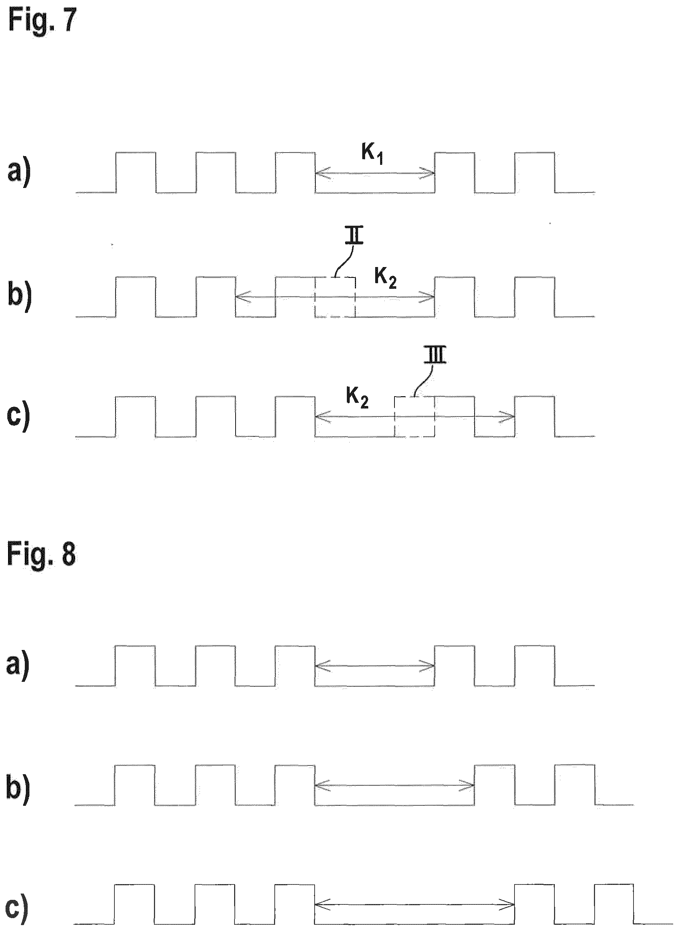

Die Lichtimpulse der Informationsstrahlen, wie in Figur 6 in einer Einzeldarstellung dargestellt, können für eine Informationsübertragung genutzt werden. In den Figuren 7a - c sind Kenngrößen K1, K2, K3 der Lichtimpulse der Informationsstrahlen dargestellt, durch deren Variation eine Information mittels des Informationsstrahls übertragen werden kann. Die erste Kenngröße K1 ist von der Pulsfolgenpause zwischen den beiden Pulsfolgen gebildet (Figur 7a). Die zweite Kenngröße K2 ist vom Abstand des Endes des zweiten Lichtimpulses der ersten Pulsfolge bis zum Beginn der zweiten Pulsfolge gebildet (Figur 7b). Die dritte Kenngröße ist vom Abstand des Endes der ersten Pulsfolge bis zum Anfang des letzten Lichtimpulses der zweiten Pulsfolge gebildet (Figur 7a).

Durch Variation einer oder mehrerer Kenngrößen K1 - K3 kann eine Information übertragen werden. Die Figuren 7b und 7c zeigen jeweils eine durch Störeinstrahlung bewirkte Pulsüberlagerung II und III. Diese Pulsübertragungen würden die Kenngröße K1 beeinträchtigen, jedoch beeinträchtigen sie nicht die Kenngrößen K2 und K3, so dass diese auch bei vorhandenen Pulsüberlagerungen II, III zur Informationsübertragung genutzt werden können.

Die Figuren 8a - c zeigen ein Beispiel wie mit dem Lichtimpuls der Informationsstrahl des ersten und fünften Senders 4 (Figuren 2 und 6) drei unterschiedliche Informationszustände übertragen werden können. Figur 8a zeigt die Übertragung eines ersten Informationszustands, in dem die Pulsfolgenpause auf einem Wert I₀ eingestellt wird. Figur 8b zeigt die Übertragung eines zweiten Informationszustands, in dem die Pulsfolgenpause auf einen Wert I₀ + ΔT eingestellt wird. Figur 8c zeigt die Übertragung eines dritten Informationszustands, in dem die Pulsfolgenpause auf einen Wert T₀ + 2 · ΔT eingestellt wird.

Generell werden die Informationszustände durch Analyse der entsprechenden Empfangssignale und gegebenenfalls durch Sollwertvergleiche in der Auswerteeinheit 9 erkannt, wodurch in den Informationszuständen enthaltene Parameter gelesen und in der Empfängereinheit übernommen werden.

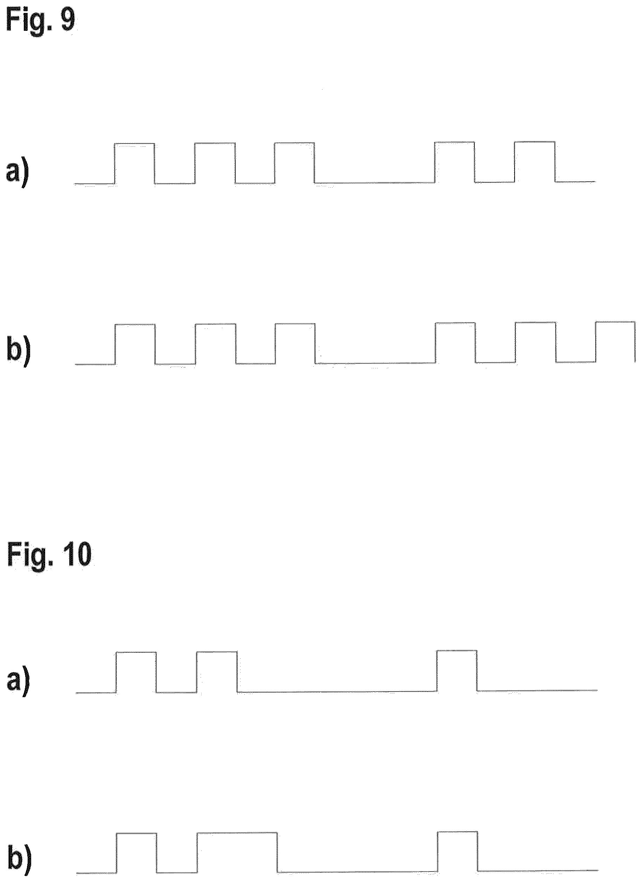

Die Figuren 9a, 9b zeigen die Übertragung von Informationszuständen durch eine Variation der Anzahl der Lichtimpulsen des Informationsstrahls. Gemäß Figur 9a wird ein erster Informationszustand dadurch übertragen, in dem die zweite Pulsfolge des Informationsstrahls zwei Lichtimpulse aufweist. Gemäß Figur 9b wird ein zweiter Informationszustand dadurch übertragen, dass die zweite Pulsfolge des Informationsstrahls drei Lichtimpulse aufweist.

Die Figuren 10a, 10b zeigen die Übertragung von Informationszuständen durch eine Variation der Pulsdauern der Lichtimpulse, wobei die Pulsdauer eines Lichtimpulses durch die Zeitdifferenz zwischen der steigenden und fallenden Flanke eines Lichtimpulses gegeben ist.

Bei der Ausführungsform gemäß den Figuren 10a, b ist der Informationsstrahl derart ausgebildet, dass der Sender 4 während einer Strahldauer zunächst einen Referenz-Lichtimpuls emittiert und dann zwei weitere Lichtimpulse emittiert. Der Referenz-Lichtimpuls dient zur Referenzierung der Pulsdauern der Lichtimpulse, wobei dieser Referenz-Lichtimpulse bei den Informationsübertragungen nicht verändert wird.

Figur 10a zeigt die Übertragung eines ersten Informationszustands der dadurch definiert ist, dass beide Lichtimpulse dieselbe Pulsdauer aufweisen. Figur 10b zeigt die Übertragung eines zweiten Informationszustands, der dadurch definiert ist, dass der erste, auf den Referenz-Lichtimpuls folgende Lichtimpuls eine größere Pulsdauer aufweist als der zweite Lichtimpuls.

Generell werden, entsprechend der zyklischen Aktivierung der Sender-Empfänger-Paare des Lichtvorhangs 1 Informationszustände zyklisch mittels der Informationsstrahlen übertragen.

Die unterschiedlichen Informationsstrahlen des Lichtvorhangs 1 können generell zur Übertragung unterschiedlicher Informationen genutzt werden.

Auch ist es möglich, in unterschiedlichen Sendezyklen unterschiedliche Informationen zu übertragen.

Bei dem Lichtvorhang 1 gemäß den Figuren 1 und 2 wird wahlweise einer der Informationsstrahlen zur optischen Synchronisation des Lichtvorhangs 1 genutzt, das heißt die Informationsstrahlen bilden zugleich Synchronisationsstrahlen.

Die durch die Lichtimpulse definierten Kodierungen erlauben vorteilhaft eine eindeutige Identifizierung der Synchronisationsstrahlen. Vorteilhaft sind dann die Kodierungen der Informationsstrahlen, das heißt Synchronisationsstrahlen des ersten und fünften Senders 4 unterschiedlich.

Besonders vorteilhaft reichen Teile der Kodierungen, beispielsweise die erste oder zweite Pulsfolge der Informationsstrahlen zu deren Identifikation aus.

### B ezugszei chenli ste

- (1): Lichtvorhang
- (1'): Lichtvorhang
- (2a): Gehäuse
- (2b): Gehäuse
- (3): Lichtstrahlen
- (4): Sender
- (4'): Sender
- (5): Sendeoptik
- (6): Empfänger
- (6'): Empfänger
- (7): Empfangsoptik
- (8): Sendersteuerung
- (9): Auswerteeinheit

## Patentansprüche

1. Lichtvorhang (1) zur Erfassung von Objekten in einem Überwachungsbereich, mit einer Anordnung von Sender-Empfänger-Paaren, wobei jedes Sender-Empfänger-Paar einen Lichtstrahlen (3) emittierenden Sender (4) und einen zugeordneten Empfänger (6) aufweist, wobei bei freiem Überwachungsbereich die Lichtstrahlen (3) des Senders (4) ungehindert auf den zugeordneten Empfänger (6) treffen, wobei bei einem Objekteingriff im Überwachungsbereich die Lichtstrahlen (3) wenigstens eines Senders (4) unterbrochen sind, und mit einer Auswerteeinheit (9), in welcher in Abhängigkeit von Empfangssignalen der Empfänger (6) ein Objektfeststellungssignal generiert wird, und wobei die Sender (4) einzeln nacheinander jeweils während einer Strahldauer aktiviert sind und Lichtstrahlen (3) in Form von Lichtimpulsen emittieren, **dadurch gekennzeichnet, dass** Sender (4) mit unterschiedlichen Strahldauern vorgesehen sind, wobei wenigstens ein Sender (4) mit einer gegenüber Strahldauern anderer Sender (4) längeren Strahldauer mittels der Lichtimpulse wenigstens eine Information an den zugeordneten Empfänger (6) überträgt, wodurch ein Informationsstrahl gebildet ist.

2. Lichtvorhang (1) nach Anspruch 1, **dadurch gekennzeichnet, dass** ein Sender (4) mit einer längeren Strahldauer, dessen Lichtstrahlen (3) einen Informationsstrahl bilden, innerhalb einer Strahldauer mehr Lichtimpulse emittiert als ein Sender (4) mit einer kürzeren Strahldauer, mittels dessen keine Information übertragen wird und dessen Lichtstrahlen (3) einen Normalstrahl ausbilden.

3. Lichtvorhang (1) nach einem der Ansprüche 1 oder 2, **dadurch gekennzeichnet, dass** ein Sender (4), dessen Lichtstrahlen (3) einen Informationsstrahl ausbilden pro Strahldauer wenigstens zwei Pulsfolgen mit jeweils wenigstens zwei Lichtimpulsen emittiert, wobei die Pulsfolgen durch eine Pulsfolgenpause getrennt sind, die größer ist als der zeitliche Abstand zwischen den zeitlichen Abständen des ersten und letzten Lichtimpulses eines Normal strahls.

4. Lichtvorhang (1) nach einem der Ansprüche 1 - 3, **dadurch gekennzeichnet, dass** eine Information mit dem Informationsstrahl dadurch übertragen wird, dass die Anzahl von Lichtimpulsen und/oder eine Pulsdauer eines Lichtimpulses und/oder eine Pause zwischen Lichtimpulsen variiert wird.

5. Lichtvorhang (1) nach Anspruch 3, **dadurch gekennzeichnet, dass** eine Information mit dem Informationsstrahl dadurch übertragen wird, dass die Pulsfolgenpause zwischen zwei Pulsfolgen variiert wird.

6. Lichtvorhang (1) nach einem der Ansprüche 4 oder 5, **dadurch gekennzeichnet, dass** mit dem Informationsstrahl ein Referenz-Lichtimpuls ausgesendet wird, der bei der Übertragung von Informationen unverändert bleibt.

7. Lichtvorhang (1) nach einem der Ansprüche 1 - 6, **dadurch gekennzeichnet, dass** über einen Informationsstrahl mehr als eine Information übertragen wird.

8. Lichtvorhang (1) nach Anspruch 7, **dadurch gekennzeichnet, dass** in unterschiedlichen Sendezyklen unterschiedliche Informationen über den Informationsstrahl übertragen werden.

9. Lichtvorhang (1) nach einem der Ansprüche 1 - 8, **dadurch gekennzeichnet, dass** mehrere Sender (4) jeweils einen Informationsstrahl aussenden.

10. Lichtvorhang (1) nach Anspruch 9, **dadurch gekennzeichnet, dass** mittels verschiedener Informationsstrahlen unterschiedliche Informationen übertragen werden.

11. Lichtvorhang (1) nach einem der Ansprüche 2 - 10, **dadurch gekennzeichnet, dass** ein Sender (4), dessen Lichtstrahlen (3) einen Normalstrahl ausbilden, eine Pulsfolge mit wenigstens drei Lichtimpulsen emittiert, die durch identische Pausen getrennt sind.

12. Lichtvorhang (1) nach Anspruch 11, **dadurch gekennzeichnet, dass** die Pausen von Pulsfolgen verschiedener Normalstrahlen in einem vorgegebenen Verhältnis zueinanderstehen.

13. Lichtvorhang (1) nach einem der Ansprüche 1 - 12, **dadurch gekennzeichnet, dass** wenigstens ein Sender (4) mit einer längeren Strahldauer und weitere Sender (4) mit einer kürzeren Strahldauer vorgesehen sind, wobei die längere Strahldauer ein ganzzahliges Vielfaches der kürzeren Strahldauer beträgt.

14. Lichtvorhang (1) nach einem der Ansprüche 1 - 13, **dadurch gekennzeichnet, dass** in der Auswerteeinheit (9) Gültigkeitsprüfungen von mit den Empfängern (6) registrierten Lichtimpulsen durchgeführt werden.

15. Lichtvorhang (1) nach Anspruch 14, **dadurch gekennzeichnet, dass** die Gültigkeitsprüfungen in Form von Sollwertvergleichen durchgeführt werden.

16. Lichtvorhang (1) nach einem der Ansprüche 14 - 15, **dadurch gekennzeichnet, dass** eine oder mehrere während einer Strahldauer von einem Sender (4) emittierten Pulsfolge empfangsseitig als gültig klassifiziert werden, wenn wenigstens Teile dieser Pulsfolge als gültig erkannt werden.

17. Lichtvorhang (1) nach einem der Ansprüche 1 - 16, **dadurch gekennzeichnet, dass** dessen Sender (4) und Empfänger (6) jeweils durch eine Schiebekette adressiert sind.

18. Lichtvorhang (1) nach Anspruch 17, **dadurch gekennzeichnet, dass** durch die Adressierungen der Sender (4) die Strahldauern vorgegeben sind.

19. Lichtvorhang (1) nach Anspruch 1 - 18, **dadurch gekennzeichnet, dass** die Sender-Empfänger-Paare zyklisch einzeln nacheinander aktiviert werden.

20. Lichtvorhang (1) nach einem der Ansprüche 1 - 19, **dadurch gekennzeichnet, dass** Informationen über Lichtstrahlen (3) zyklisch übertragen werden.

21. Lichtvorhang (1) nach einem der Ansprüche 1 - 20, **dadurch gekennzeichnet, dass** dessen Sender (4) und Empfänger (6) optisch synchronisiert sind.

22. Lichtvorhang (1) nach Anspruch 21, **dadurch gekennzeichnet, dass** die optische Synchronisation anhand eines Synchronisationsstrahls erfolgt, wobei der Synchronisationsstrahl von einem Lichtstrahl (3) gebildet ist.

23. Lichtvorhang (1) nach Anspruch 22, **dadurch gekennzeichnet, dass** mehrere Synchronisationsstrahlen vorhanden sind, wobei wahlweise einer der Synchronisationsstrahlen zur Synchronisation der Sender (4) und Empfänger (6) herangezogen wird.

24. Lichtvorhang (1) nach Anspruch 13, **dadurch gekennzeichnet, dass** die Synchronisationsstrahlen unterschiedliche, durch Lichtimpulse vorgegebene Kodierungen aufweisen.

25. Lichtvorhang (1) nach einem der Ansprüche 23 oder 24, **dadurch gekennzeichnet, dass** der oder die Synchronisationsstrahlen durch Erkennen wenigstens eines Teils dessen innerhalb einer Strahldauer emittierten Lichtimpulse eindeutig identifizierbar ist.

26. Lichtvorhang (1) nach einem der Ansprüche 23 oder 24, **dadurch gekennzeichnet, dass** vor einem Synchronisationsstrahl eine zusätzliche Pause gewartet wird, um das Aufsynchronisieren des Empfängers auf den Sender zu vereinfachen/verbessern.

27. Lichtvorhang (1) nach einem der Ansprüche 23 oder 24, **dadurch gekennzeichnet, dass** ein Informationsstrahl gleichzeitig ein Synchronisationsstrahl ist.

28. Lichtvorhang (1) nach einem der Ansprüche 1 - 27, **dadurch gekennzeichnet, dass** dieser ein Sicherheitssensor ist.
